# EUROPEAN PATENT APPLICATION

(11) **EP 3 736 645 A1**
(43) Date of publication of application: **11.11.2020**
(21) Application number: 19173818.6
(22) Date of filing: 10.05.2019
(51) Int. Cl.: G05B 13/02

(54) **METHOD FOR AUTOMATED CONTROL OF MATERIAL PROCESSING AND CONTROL UNIT**

(71) Applicant: EMPA Eidgenössische Materialprüfungs- und Forschungsanstalt, 8600 Dübendorf (CH)
(72) Inventor: Wasmer, Kilian, 1871 Choex (CH); Shevchik, Sergey, 8067 Zürich (CH); Quang Tri, Le, 3604 Thun (CH)
(74) Representative: Keller Schneider Patent- und Markenanwälte AG (Zürich)

(57) **Abstract**

The disclosed invention comprises a method for automated control of material or laser processing processes, , wherein the method is controlled by a control unit (12) calculating correction output signals (u) and controlling an energy generator unit (1), an energy delivery unit (3), an energy delivery output measurement (4), at least one material-energy interaction measurement unit (7) for measurement of actual machining results (s), which are fed via a control unit input (13) and sub-units for generating correction output signals (u) in a close loop, which lead to desired machining results, wherein the correction output signals (u) are applied via a control unit output (14) to the energy generator unit (1) and the energy delivery unit (3) by an energy delivery control sub-unit (11) and/or a second energy delivery control sub-unit (15), and the computation of correction output signals (u) is executed by machine learning procedures. A used observation sub-unit, an optional optimization sub-unit and a correction sub-unit are parts of the control unit (12) and based on neural networks as machine learning technique.

## Description

### TECHNICAL FIELD

The present invention describes a method for automated control of material or laser processing processes, wherein the method is controlled by a control unit calculating correction output signals and controlling an energy generator unit, an energy delivery unit, an energy delivery output measurement, at least one material-energy interaction measurement unit for measurement of actual machining results, which are fed via a control unit input and sub-units for generating correction output signals in a close loop, which lead to desired machining results, wherein the correction output signals are applied via a control unit output to the energy generator unit and the energy delivery unit by an energy delivery control sub-unit and/or a second energy delivery control sub-unit, while the computation of correction output signals is executed by machine learning procedures. Also a control unit for automated control of material processing processes, in particular in material tool or laser processing like additive manufacturing or laser welding of a material, controlling an energy generator unit, an energy delivery unit, an energy delivery output measurement, at least one material-energy interaction measurement unit for measurement of actual machining results, which are fed via a control unit input, comprising means for sending correction output signals from a control unit output to an energy delivery control sub-unit and/or a second energy delivery control sub-unit is described.

### STATE OF THE ART

The interesting technical field here are systems for parameter control during different materials processing, for example laser processing. Laser processing methods are the exposure of some material to laser light aiming to reach the desired (e.g. a-priory known) improvements of the materials properties/structure/shape. It is well-know from the literature that the difficulty of such a process is the strong dependence of the materials properties/structure from the light dose deposited on/inside the material. The difficulty to deposit the needed light dose locally is due to several factors, namely:
i) the non-uniformities in laser matter interactions due to the local particularities in optical properties of the materials and
ii) the complex heat transfer inside the material, including the heat affected zone that redistributes the light induced heat thus effecting the material properties/structure. All these factors are leading to different quality when delivering the same light dose, e.g. the density of the laser power irradiation at a time unit.

So far traditional control schemes are known, in which linear PID, PI, P or some higher order control are used.

CN106319196 describes an automatic system temperature control using a laser source. It includes a laser source, laser delivery system that focuses the laser light onto a spot on the surface of some material. The measurements of actual machining results as a feedback in automated control are carried out using the infrared double colour photodetector that provides with the momentary temperature values obtained from the surface of the irradiated material. CN106319196 uses a standard linear control, here a PID that adjusts the laser power to reach the predefined temperature value of the irradiated material using proportions of the PID. Those controllers have a fixed structure, meaning a fixed placement of poles/zeros of the control transfer functions, thus providing with no self-tuning to adapt to the changes of the material respectively the environment.

In WO2012000648, an automatic system with a negative feedback loop is described that includes a matrix infra-red detector in a negative feedback loop. The system simply incorporates P, PI, PD or PID control trying to reduce the quality deviations of the material processed.

US2017270434 shows an automatic system for laser processing control. The system is a closed loop system that measures some actual parameters of the process (like temperature, optical emissions etc.). A description of the machine learning for full control is proposed. In this setup, the machine learning system receives the measured information from the material processed and learns online (e.g. identifies the system dynamics, optimizes itself and corrects).

Existing machine learning techniques exploit machine learning for the classification of the momentary values of the machining results measurements, correlating those with as some discrete states of machining results. In listed above prior art such classification allows to switch between different predefined controls, depending on the momentary situation. So far the approach to reconstruct the full parameter-time space was estimated badly buggy.

According to the prior art no long term predictions in form of foreseeing the control modulations are possible but only the ones that correct the system in a moment, specified by the frequency rate of the measurements. The prior art is using a single point prospective, tracking momentary events as fast as possible and trying to estimate the momentary position in the time-parameter space, but not a path of the time-parameter space, on which the actual process is running.

### DESCRIPTION OF THE INVENTION

The object of the present invention is to create a method for material laser processing, in particular for additive manufacturing or laser welding, with improved process control reaching improved predictable and reproducible material laser processing results.

We propose fully automatic quality control that is robust, reliable, applicable to different materials/applications, which is learning by itself. The novelty here is that the invention relies not on traditional methods of the design of automatic control systems, in which the structure of the correction is a priori fixed and is designed for the known parameter-time space, but uses machine learning/artificial intelligence for the analysis of the processes with unknown parameter-time space.

Presented solution uses computer systems, machine learning and neural networks, but estimates the path in the time-parameter space of the actual process from a path time depending prospective.

### BRIEF DESCRIPTION OF THE DRAWINGS

Further understanding of various aspects of the invention can be obtained by reference to the following detailed description in conjunction with the associated drawings, which are described briefly below.
- Figure 1: shows a schematic view of a material processing setup in form of a laser processing setup for the presented method for automated control of material processing processes.
- Figure 2: shows an operational scheme of a control unit with sub-units.
- Figure 3: shows a schematic of the observation sub-unit with memory, while taking time series of values and data processing.
- Figure 4: shows an operation scheme of an optional optimization sub-unit between observation sub-unit and a correction unit.
- Figure 5: shows an operation scheme of a correction sub-unit of the control unit, while
- Figure 6 and 7: are showing possible architectures of sub-units using neural networks.

### DESCRIPTION

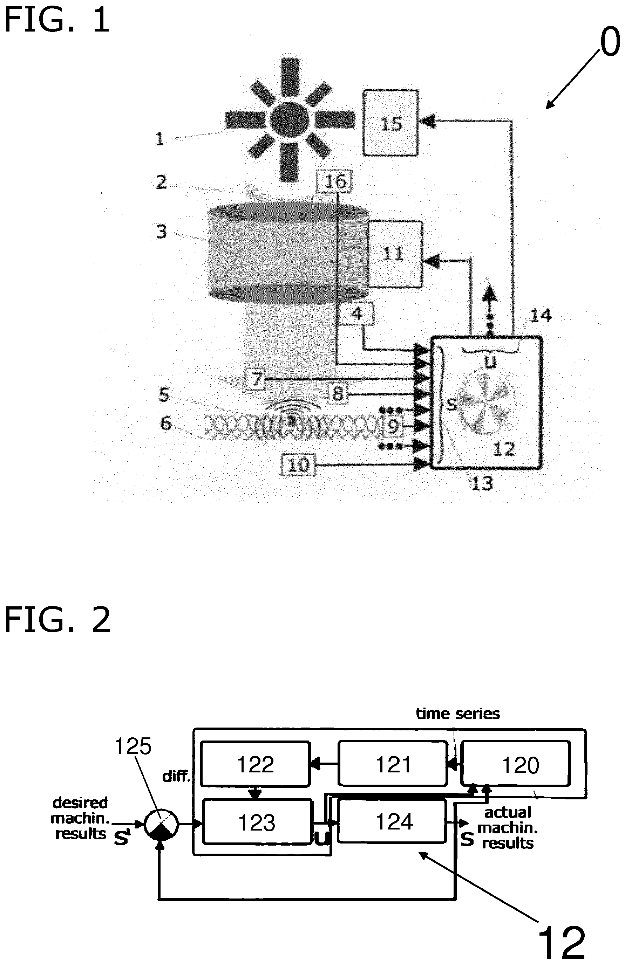

An exemplary material processing setup 0 in form of a laser processing setup 0 is depicted in figure 1. Material machining / material processing result here is an expected structure and/or microstructure and/or properties (mechanical, material, etc..) and/or shape of the material after the subtraction/deposition/application/transmission of some energy on/to/inside it.

The laser processing setup 0, its inner parameters and its operating environment hereafter are introduced as machining/processing conditions. Taking the example of laser processing, the machining/processing conditions are defined by the outputs of an energy generator unit 1, generated energy 2 and the energy delivery unit 3. This can be more generally applied to any other sources of the electromagnetic waves and the characteristics of the machining conditions, derived from the device, can be characterized by a waveform and a wavelength, a power density, a power density distribution.

In case of ion/particles beam 2 the outputs of both are characterised by the ion flow (number of ions flow via a cross section of a fixed area in one direction during some time, and/or the kinetic power for each ion in the beam that is equivalent to the temperature). In case of mechanical energy transport (in mechanical processing) the outputs are characterised by momentum, force, pressure of a tool on the material In case of the air-hydrodynamics (as in water jet cutting systems) it can be flow turbulence etc.. The more details about the possible parameters are listed below as inputs/outputs of the control unit 12.

The control of the machining conditions output of the energy generator unit 1, as well as the output of the energy delivery unit 3 can be transformed according to some well-known and predefined rules and those can be realized by applying some external electrical signals, or mechanical force. These changes can be done with some specialized hardware, an energy delivery control sub-unit 11 respectively an optional second energy delivery control sub-unit 15, which are controlled externally. The changes result the output characteristics for the energy generator 1 and energy delivery units 3 and can be measured via detectors respectively sensors that may be installed at the outputs of both energy generator unit 1, energy delivery output measurement 4 and energy generator output measurement 16. Also, the same detectors may be installed in some other way that allows measuring the actual machining results. For example, in case of the fibre optics the detectors can be in contact with the fibre optical wave guides and not necessarily at its face.

Additionally, the material processing setup 0 also may include the devices for moving the material relatively the energy delivery unit thus also affecting the amount of the energy deposited in the material and causing different machining/processing results.

The machining results are effected by two factors. First is the set of machining parameters that are part of the hardware/software and thus can be changed/adjusted/tuned as is discussed above. Second the surrounding environment and material properties that cannot be controlled.

The former maybe humidity, temperature, gas/air flow, while the latter can be the optical properties of the materials, density, variations in melting point etc. This brings to the uncertainties in energy deposition on/inside/in the material thus, deviating the actual machining results from the desired ones.

For distortions, we consider the unexpected changes in any of the parameters of the energy generation and/or energy delivery unit 3 that affect the energy output characteristics from both. For example, in case of the usage of the laser sources such parameters may be the changes in the resonator environment of the laser sources. This shifts and/or damps the output light. The degradation in optics may cause the speckles due to the phase shifts and these effects the power density distributions inside the beam. For the electrical systems, this may be some drift due to the degradation of the p-n structures in the electronics, and/or bed contacts. In acoustics, this may be a degradation of acoustic membranes in acoustic generator/sensor that may equally affect almost all parameters of the acoustic wave in a stochastic way (changing its phases, frequencies, amplitudes etc). In lasers, this is the degradation of the lens surface that effect the light waves phase/amplitude. In this case, the interference is a cause of the output laser light characteristics. As another example the changes in the parameters of the energy generator or energy delivery unit (lifts, drifts in output parameters, response delays etc.) that may be also a subject for the application of the correction.

We propose a solution in determining the optimal momentary energy deposition/transmission/application on/to/inside the material 6 in order to reach the desired machining/processing result in on-line mode under the aforementioned uncertainties.

To provide such functionality there is at least one control unit 12 that is based on machine learning methods and may incorporate the elements of reinforcement learning as well. It learns the production conditions online, adapts itself accordantly and corrects the material machining to get the desired machining results.

The whole material processing setup 0 comprises:
at least one energy generator 1;
at least one energy delivery unit 3 that delivers the energy from the generator to the material;
at least one energy delivery output measurement unit 4, that detects an amount of the output energy, emitted from the energy delivery system;
at least one material-energy interaction measurement unit 7, that detects the results of the energy deposit on the material;
at least one control unit 12, that collects the information from the units that detect the machining result and makes the corrections.

The material processing setup 0 is a closed loop control and comprises the above mentioned features.

The at least one energy generation unit 1 transmits the energy 2 to the energy delivery unit 3. The energy delivery unit 3 delivers the energy to the material 6 machined in a material energy interaction zone 5.

Due to the energy projection on the material 6 and its partial deposition inside it, the changes of the material properties and/or structure takes place and this is mentioned here and below as the machining/processing result. The detection of the results in this material energy interaction zone 5 is done with the material-energy interaction measurement unit 7 or additional material-energy interaction measurement units 8, 9, 10. The machining/processing result can be directly or indirectly measured by material-energy interaction measurement units 7-10 respectively sensors 7-10 that may register different physical parameters, thus tracking different underlying physical phenomena related to the machining results. Those sensors 7-10 may have a different placement and relative positions. Additionally, they may be placed in contact or distantly with the machined/processed material.

The output of the sensors is connected to the control unit 12 through a number of control unit inputs 13. The control unit 12 analyses the input data from control unit inputs 13 that represents the machining/processing result from signals from material-energy interaction measurement units 7-10, learns the process and generates the correction output signal u that is sent to the energy generator output measurement 16 and energy delivery control sub-unit 11. Those changes in the parameters of the energy delivered to the machined/processed material 6, effects its structure/properties and the cycle of the correction is repeated again.

As mentioned above, the control unit 12 here is based on machine learning methods and comprises:
a memory 120 that collects the short history of energy transmitted to the material, measured by the energy delivery output measurement unit 4, the corresponding correction output signal u sent from the control unit output 14 and the machining result, measured by at least one material-energy interaction measurement unit 7, respectively additional material-energy interaction measurement units 8, 9, 10. Additionally, it may include the correction unit that outputs the correction output signal u to the energy generator unit 1 and the energy delivery control sub-unit 11.

The correction output signal u is accepted by the energy delivery controls sub-unit 11 and the energy generator control sub-unit 15 that change the characteristics of the energy output energy. Here, the loop with the correction unit 12 compensates the difference between the predefined value for the energy characteristics and the real one.

This additional correction of the energy delivery unit 3 and energy generator unit 1 may be realized with some additional control units 12 or can be integrated within a single one as is shown in figure 1. The correction of the output of both units 1, 3 is realized as an additional control loop although the same control unit 12 with the same structure and algorithm inside is involved.

The correction output signals u are always present during material machining and aims to correct the changing production conditions. From the general scheme in the figure it can be seen that u is an output of the control unit and is a matrix of a size (vxz), where v is the length of the outputted correction output signal and predefines the individual values in the correction output signal v time stamps ahead. This sequence is formed based on the forecasting the needed correction (the sets of values ui that are predefined for the next i=1,...v time stamps). This is based on the prediction/forecasting/regression of the process dynamics using the correlation and is discussed within the next figures. The number z corresponds to the number of the control loops, or a number of external devices that are needed to be corrected. In case if only main loop is included into control loop (see explanations above) this parameter fulfils: z=1. As an additional example for the case from the figure, where the inner parameters of the energy delivery 3 and energy generator 1 units are also included, this value is z=3. In present invention this value is not limited and can be extended up to a realistic number.

### Fig.2

In the scheme of a control unit 12 according to Figure 2, the input is the desired machining result s' that is given as a parameter and/or a (unique) combination of parameters. The desired machining result s' is an expected structure and/or properties of the material after machining that can be directly/indirectly measured by any means, for example with one of the sensors 7 to 10. As an example in the laser processing, this parameter may be the known temperature inside the laser focus zone on the surface 5 of the material 6. In this case, some temperature ranges are known for some specific materials that provide with the minimum defect rates.

The memory 120 in the control unit 12 is used for storing actual machining results s and desired machining results s' and correction output signals u within a time series in the past, forming a saved parameter history.

The control unit 12 comprises means for at least sending data to an observation sub-unit 121, a correction sub-unit 123 and sending production conditions 124. The output of the correction sub-unit 123 is the correction signal u, transmitted to the machining process. It is formed in a way to minimize the difference between s and s'.

Optionally an optimization sub-unit 122 can be part of the control unit 12, as shown here. The production conditions 124 are represented by the correction output signals u, which are leading to actual machining results s after applied from the control unit output 14 to the energy delivery control sub-unit 11 and/or the second energy delivery control sub-unit 15.

The output s is the actual machining result that may be different from the desired machining results s' due to the uncertainties in the production conditions. Under this circumstance the control unit 12 aims to compensate the difference between s and s'. This difference is analysed using a comparator 125, where both parameters are transmitted (s is transmitted via feedback). The compartment inside the comparator 125 may be carried out by a simple substraction of the desired machining results s' with the actual ones s. In this caser the output of the comparator 125 represents the difference between those two characteristics.

Alternately, the output of the comparator 125 can be a flag of the match of s to s', defined by a label 0 or 1. Alternately, the comparator 125 may be not included inside the scheme, but the actual machining results s may be directly transmitted to the correction sub-unit 123 input, while the desired machining results s can be stored inside its memory 120.

To reach the flexibility in adaption of the correction signals u to the new machining conditions the control unit 12 incorporates the several sub-units 121, 122, 123. Those sub-units 121, 122, 123 monitor the relations between the correction signals u and the actual machining results s, renew the inner parameters of the control unit 12 (to gain the better correction) and forms the correction output signals u to compensate the uncertainties in the production conditions.

Following the scheme in the figure, the control unit 12 includes the memory 120, which is built in here. It accumulates two time-series u[u[0], ...u[v]] and s[s[0],...s[m]], where u[.] and s[.] are the momentary values of the correction signal u and the actual machining results s obtained at a specific time stamp that are the indices inside the brackets. The values v and m characterise the length of both time-series. Those lengths may be fixed or may vary adaptively, depending on the realization.

Each momentary value u[.] or s[.] may be represented by a single number or a vector. This is dependent on the number of the closed loops for u or the number of detectors 7 to 10, involved for monitoring in case of s. Several possibilities in synchronization of those two incoming time-series can be applied, which are known form the art.

A time delay k between both time series, as well as the length of both u and s, can vary depending on the operation of the control unit 12. The choice for the shorter parameters may be made when the control unit 12 makes frequent mistakes with the correction of machining results s. The reason for this may be in the short transients that take place during the material machining/processing thus requiring faster response. In caser the correction that is provided by the control unit 12 is acceptable, than all three parameters may be increased, thus operating at time scales.

Getting both time series, the control unit 12 gets the information about the response (e.g. the changes in time) of actual machining result s to the given correction u under uncertainties in production conditions. The time-series s here describes the transients of the whole production conditions under the correction u.

Once the memory 120 is filled with both time-series u and s with the momentary values taking into account the delays, those time-series u and s are transferred further to at least the observation sub-unit 121. After that, the accumulation of the new time-series takes place taking into account the relative delay of both time series towards each other.

The observation sub-unit 121 analyses the machining results s under the exposure of the correction output signals u. The analysis is based on the comparison of time-series u and s, received form the memory 120 as is described above and not only by comparing a single data of u and s from the past. The observation sub-unit 121 decides if the transient s was already met by the control unit 12 before, or it is a new one. This observation sub-unit 121 is based on machine learning, wherein the analysis is carried out based on neural networks as machine learning technique.

The correction sub-unit 123 is based on a machine learning technique, too. This implies that the correction signal u is linked with the output of the comparator 125. This link can be provided with the correlation model that is described by the set of the inner parameters inside this correction sub-unit 123. This correlation model is regularly updated following the changes in the production conditions 124. The correction signal u is formed in a way to minimize the difference between s' and s.

The correction sub-unit 123 is included into the closed feedback loop and can run independently from the other sub-units 121, 122 of the control unit 12.

The optimization sub-unit 122 includes the inner parameters of the correction sub-unit 123 and updates those for a better performance during changing production conditions.

### Fig3

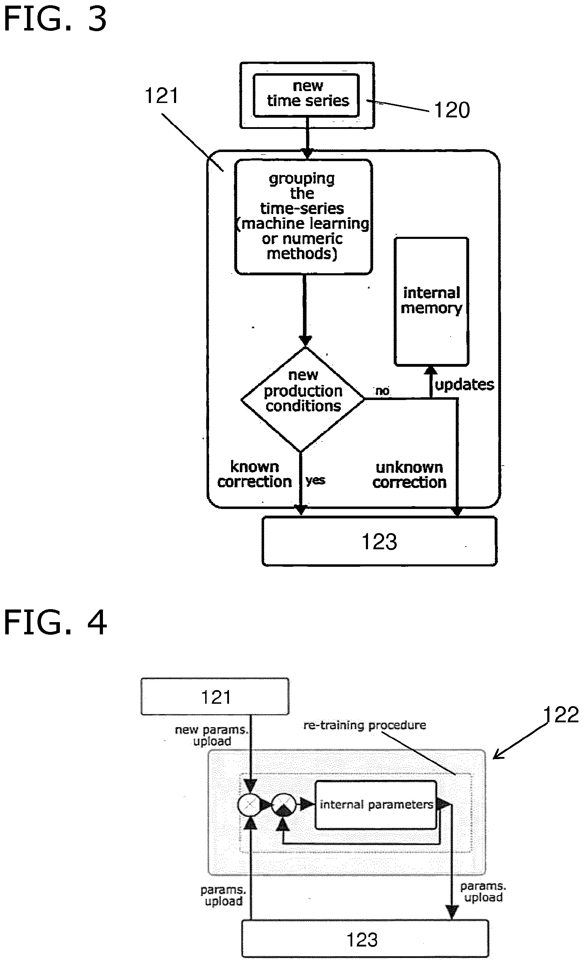

FIG.3 shows the operation of the observation sub-unit 121 inside the control unit 12. The main objectives of this observation sub-unit 121 are:
i) to track if the new production conditions accrued and the correction is not clear to compensate those, and
ii) track the efficiency of the correction sub-unit operation in changing the machining/processing conditions if even the production conditions 124 are known. This observation sub-unit 121 stores the information about all the time-series s that were met before and were initiated by some u. The observation sub-unit 121 therefore has an internal memory. It takes the decisions on the updates of the inner parameters of the correction sub-unit 123 and this is done following some criteria that are described below.

The tracking of the new machining results 124 is based on the analysis of the incoming timeseries u and s. The observation sub-unit 121 operates based on neural networks as machine learning technique. The described techniques above is carried out for both u and s separately but memorizing the information, which u initiated which s, namely a pair of (u, s) is kept in the memory 120.

The tracking of the new machining results 124 is realized with machine learning technique. As a machine learning in the sub-units 121, 122, 123 neural networks, support vector machine, decision trees, Bayesian frameworks are used. The machine learning here is used for correlation of the multidimensional input u (or s) with the multidimensional output s (or u). In fact, if the time delays between u and s exist, the machine learning here acts as a repressor, e.g. forecasting the future dynamics of u (or s) in its output having s (or u) as input. In this way, the storage of all previous u and s is not needed, while the information about those is kept as a set of the internal parameters of the machine learning algorithm used. For example, for decision trees, the information about already met pairs u and s is stored as a split weight in the trees nodes, the trees depth etc..

The detection of the new machining results 124 using machine learning may be done in the following way. The new incoming time series u_{new} and s_{new} are received and one of those time series, u_{new} or s_{new} is fed to the machine learning repressor. The repressor output, sₒᵤₜ or uₒᵤₜ is compared than with the actual incoming time series u or s. If the repressor output matches the real time-series, then production conditions 124 were already met and known correction for those exist. If the repressor output does not match the real time-series, then the production conditions 124 are new and no correction is defined for it. The match between both, sₒᵤₜ or uₒᵤₜ and u_{new} or s_{new} can be carried out using the distance measure, graph or correlations methods that are discussed above. If the production conditions are not known the machine learning updates itself (e.g. its inner parameters) taking into account the new production conditions 124. This is named online learning method.

We would like to underline once more the importance of the grouping of the pairs u and s. In cases when the new time-series u and s are close to (or even included inside) some existing clusters in a statistical way, or topological way, or correlated well by a machine learning (in other words are already known), means that the correction signal 124 and/or a series of signals 124 can be generated properly by the correction sub-unit 123 and the correction is known for this case. For this case, the output from the observation sub-unit 121 is marked in the figure with a known correction flag.

If the newly arrived time series u and s are not known (cannot be correlated well by the machine learning approach), then the correction signals 124 that have to be applied are not known. In this case, the output of this correction sub-unit 123 is denoted in the figure as the unknown correction. Once the time series u and s arrived to the observation sub-unit 121, those are stored inside it in case they represent the new production conditions 124. In this case, they represent the known production conditions 124 they may be not memorized. The memory about the new production conditions 124 may be done storing the whole u and s, their feature representation, or their representation as internal parameters of some machine learning technique, for example neural weights.

Another outline here is that for cases, in which both time series u and s are shifted relatively each other in time domain, the observation sub-unit 121 performs forecasting of the future dynamics of the machining result s under the known correction u. This implies that for known production conditions the correction u is known and can be provided by the observation sub-unit 121. This is done just searching the corresponding cluster of s for the s∼ that was closer to the desired machining conditions and taking the corresponding u for further correction. This strategy is similar to dynamic programming, where the space of the possible states is filled by the system during on-line learning.

### FIG 4

FIG4 is the operation scheme of the optional optimization sub-unit 122. The optimization sub-unit 122 may duplicate the correction sub-unit 123 and is based on machine learning, too. It modifies/updates/adapts the inner parameters of the correction sub-unit 123 thus keeping it updated relating the new production conditions 124. In other words, this optimization sub-unit 122 adds the new knowledge about the production conditions 124 and the corresponding correction strategy. This requires the retraining of the correction sub-unit 123 while it is operating. The retraining inside the optimization sub-unit 122 is carried out in a close loop, where the error rates of inputs outputs are minimized. For neural networks that can be changes in the neural weights and the loop is the gradient descent (back propagation).

Different strategies for the optimization of the inner parameters of the correction sub-unit 123 can be used in our invention.

First, the optimization sub-unit 122 may update the correction sub-unit 123 regularly within some fixed time intervals. This guarantees that the inner parameters of the correction sub-unit 122 are up-to-date independently from the dynamics of the process. The time intervals, in this case can be established by the user. Alternatively, the optimization sub-unit 122 may update the inner parameters of the correction sub-unit 123 by a triggering event from outside the control unit 12, and/or the trigger from the correction sub-unit 123.

Alternatively the optimization sub-unit 122 may update the inner parameters of the correction sub-unit 123 when two conditions are fulfilled at the same time:
i) the new time-series u and s arrived (e.g. unknown production conditions were tracked by the observation sub-unit 121 as is explained above), or the time-series u and s are slightly different from the ones that were met before and still the update is needed;
ii) the output from the comparator 125 is equal to zero or less than some predefined threshold (for the comparator inputs/outputs see the description to Fig.2). These aforementioned conditions imply that the adaption to the new production conditions 124 was done successfully.

Alternatively, the optimization sub-unit 122 may update the correction sub-unit 123 when the correction sub-unit 123 cannot find a right correction strategy during some fixed time period. This means the existing inner parameters of the correction sub-unit 123 do not provide with the needed quality of correction and the updates of the inner parameters with the new knowledge is needed.

Alternately, the triggering of the parameters updates by the optimization sub-unit 122 may be done using all of the aforementioned conditions.

For adding a new knowledge about the new production conditions 124 to already existing one, the upload of the information from the observation sub-unit 121 (a knowledge about the new production conditions) and from the correction sub-unit 123 (already existing knowledge about already known production conditions) is carried out at the same time. The retraining may be done using several realizations.

The retraining of optimization sub-unit 122 and/or correction sub-unit 123 is realized in different ways.

First, realization is the online-learning approach, T. Anderson, The theory and practice of the online learning, AU Press, Atabasca University, 2008. In this method, the learning scheme has already existing inner parameters of the correction sub-unit 123 are uploaded into the optimization sub-unit 122. The goal is to slightly tune those parameters for better match to the new production conditions 124. The new knowledge here is added without erasing those parameters that represent already in existing knowledge, but adapting those. At the same time, the new time-series u and s are uploaded from the observation sub-unit 121. Those are used as a new knowledge about the new machining results 124 and this has to be added to the existing inner parameters.

Reinforcement learning is an additional tool in this case that plays a role of the sub-unit 122, while machine learning is needed as a memory storage of the approximated results of the value function of the reinforcement learning algorithm.

All subunits 121-123 can be realised as separate neural networks, or unified within a single neural network but as its different sub-layers. The separate sub-units 121, 122, 123 can be implemented as single separate neuronal layers, or several connected neuronal layers, or even a separate network for each individual sub-unit 121, 122, 123. In latter case each sub-unit 121, 122, 123 can be realized as a network of the same type, or each sub-unit can be realised as network of different type in terms of neurons interconnections.

In case when optimization sub-unit 122 is realised on neurons, the new knowledge, which it captures, is a new combination of machining process input/output that was not met before. This knowledge is memorized by the retraining procedures, applied to the neurons of this subunit. The retraining can be conducted, for example, using simple gradient descent algorithms, if optimization sub-unit 122 is organised as a standard layer/network with regular neuronal interconnections.

Also, the retraining can reorganize the interconnections within the neurons if the sub-unit 122 is realized with the spiking neurons or spiking neural networks .

In this case the new knowledge is acquired by self reconnection of the neurons until the optimal connection provides the desired machining result. After such a reconfiguration of the optimization sub-unit 122 the correction sub-unit 123 can be retrained accordently.

It is known that the retraining of neural networks is a time consuming task that may provoke pauses in control during retraining or incorrect control operation while the gradients within the networks will be changed and this effects the quality. To avoid this, the present application proposes a novelty. If subunits 121, 122, 123 are realised as separate neuronal layers or neural networks, as described above, each such network can be splitted further into several groups of neuronal layers, contained within it. Each such group possesses different depth, e.g. different number of hidden layers involved. In this configuration the more shallow groups of layers can be re-trained faster, thus avoiding long pauses in control process. At the same time those have less memory capacitance, e.g. can memorize less information.

Once shallow groups of layers are trained the information is forwarded to deeper groups of layers, that requires more training time, but may possess higher memory capacitance. In this cascade the knowledge propagates and accumulates gradually from more shallow groups of layers to the more deeper ones, while control is provided continuously or with minimum pause.

Additionally to the cascade architecture in neural networks retraining, it is possible to have another mirror neural networks comprising cascaded groups of layers of neural networks, in parallel to the operating layers or groups of layer. Once the retraining is needed for any of subunits 121, 122, 123, it is run in parallel network and in the background, without stopping the actual process. Once the retraining is finished the parameters are transferred to the operating networks of subunits 121, 122, 123, involved in control process.

After, both parts are uploaded, the retraining takes place. The objective of the retraining is to compute the gradients of the needed shifts of the existing parameters. Those shifts depend on the structure of the new u and s that represent the new production conditions 124. This scheme can be realized by uploading the existing inner parameters from the correction sub-unit 123.

In case of the neural networks, this may be the weights and / or connections of the neurons (if non regular connections are used as in recurrent neural networks or networks on graphs).

After the retraining the new inner parameters from the optimization sub-unit 122 will be loaded into the correction sub-unit 123.

The aforementioned machine learning framework can be built in the observation subunit 121 or the subunit is a network with the aforementioned functionality.

### Fig5

FIGS shows the operation scheme of the correction sub-unit 123. This correction sub-unit 123 is machine learning based and based on neural networks, as described above. It objectives of the machine learning are to correlate the inputs (s-s') with the outputs u, both are time series and may be multidimensional, if more than one material-energy interaction measurement unit 7 is used. The generated correction u should compensate the uncertainties and provides the desired machining result s'.

It includes two strategies that are directed from the observation sub-unit
i) correction is known as current machining conditions 124 are known, and
ii) correction is unknown as current machining conditions 124 are known.

Both cases are derived from the observation sub-unit 121 and the corresponding analysis can be found in the description to figure 3. In both cases, the correction sub-unit 123 operates differently.

If the production conditions 124 are known than the correction u is also known and can be provided by the observation sub-unit 121 directly. The selection of the right u inside the correction sub-unit 123 is carried out using the techniques that are described in figure 3. It is done by estimating the current momentary production conditions 124 and selecting the best u, which brings the machining results s as close to the desired ones s' as possible).

In this case, the correction is not known the standard existing strategies may be applied to find the directions of the improvements for the actual machining results s. In general, the search for the new outputs may be carried out changing the inner parameters of the correction sub-unit 123. For example, in case of support vector machines, this may be done changing the weights vectors. The same neural weights can be changed when using the neural network. As an example of the latter the method from (G. Ligtbody, G. Iming, Neural networks for nonlinear adaptive control IFAC Workshop on Algorithms and Architectures for Rent Time Control, pp. 113, 1992) can be applied here.

The network changes the weights of the neurons, observing the gradients of the changes in the machining results s. The successful changes of the neural inner parameters (e.g. weights) are characterised by the shifts of the actual machining results s in the direction of the desired one that here are denoted as s'. The changes of the neural weights here can be reserved by the retraining using the optimization sub-unit 122. Alternatively, this can be triggered by the observation sub-unit 121. As soon as the actual machining results are close to already known ones the preserving of the actual weights can be triggered by the observation sub-unit 121. For more details on the retraining of the correction of the optimziation sub-unit 122 using the conditions from the observation sub-unit 121, see the description to figure 3. Support vector machines can be used in the similar way as are used for the determining the non-linear functions (e.g. production conditions of a deterministic nature in our case) (A.K. Suykens, Support vector machines: a non-linear modelling and control perspective, European journal of control, p311-327, 2001). In this case, the search is carried out changing the weights of the decision function (e.g. moving the hyperplane and trying to catch the right direction). The right direction here of the gradient of s is a one that is bringing s closer to s'.

In the present invention, the search of the right direction of the tuning (the one that brings s closer to s') will be stopped as soon as the observation sub-unit 121 will observe/predict that the current machining results were already met before and will send the correction that is needed to reach s'. The search of the best direction also can be involved when the correction was estimated as known by the observation sub-unit 121 (see the description for figure 3), although a slight correction is needed to bring s closer to s'.

### FIG 6

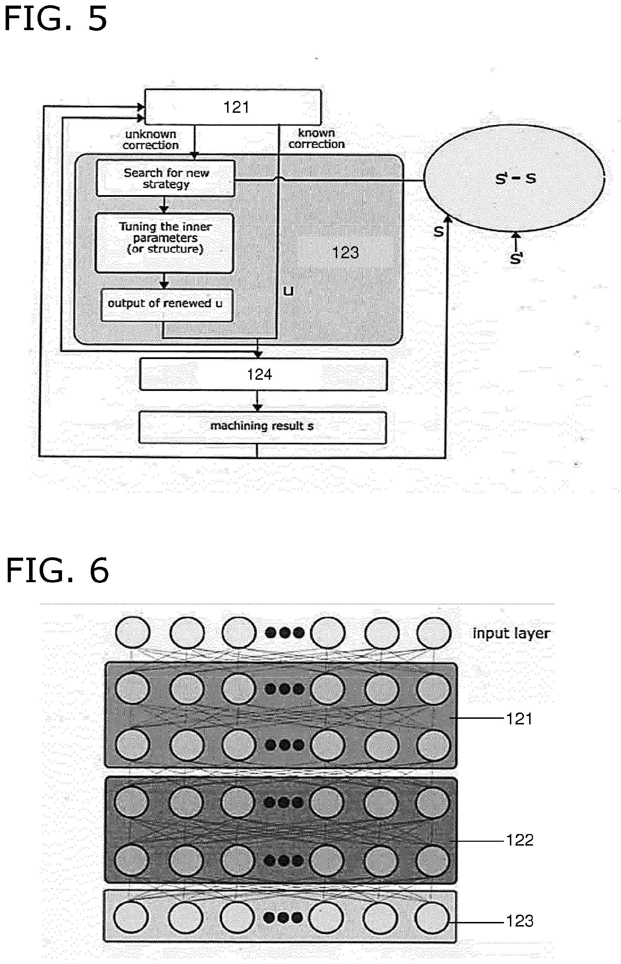

FiG.6 shows one of some possible architectures of the entire control unit 12 that is described in the figure. As is mentioned above all its sub-units 121, 122, 123 included into this control unit 12 are based on machine learning.

This entire architecture can be realized as a deep neural network. In this case, the memory 120 for storing the momentary time-series u and s is distributed among the neural nodes that form the network itself. The neural network has several hidden layers that are interconnected with each other.

The correction, observation and optimization in this architecture/control unit 12 may be realized as several hidden layers of the neurons that follow next to each other. This is shown with the colour fill in the figure 6. Together with the traditional feed forward neural networks with the regular connection grid, the ones with the irregular connection grid can be also employed. The connections in such networks can be organized, for example, on the spectral graphs principles. The same way recursive, Hopfield, attractor, Bayesian networks can be employed here (S. Hasim, S. A. Beaufays, Francoise, Long Short-Term Memory recurrent neural network architectures for large scale acoustic modeling, 2014; S. Fernandez, A. Graves, J. Schmidhuber, An Application of Recurrent Neural Networks to Discriminative Keyword Spotting, Proceedings of the 17th International Conference on Artificial Neural Networks. ICANN' 07. Berlin, Heidelberg: Springer-Verlag: 220-229, 2007,ISBN 978-3-540-74693-5, J.J. Hopfield, Neural networks and physical systems with emergent collective computational abilities, Proceedings of the National Academy of Sciences of the USA, vol. 79 no. 8 ppm 2554-2558, April 1982).

At the same time the layers or the networks that are subunits 121,122,123, can be split further into several groups of layers of different depth as is described above. The training of those groups of layers can be done in a cascade way starting from the training of the shallow layers groups and following to the deeper layers groups, thus minimizing the pause in the operation of control.

Alternatively, the training of the layers or networks of subunits 121,122,123 can be carried out using the parallel mirror layers/networks and the training in this case is running on the background to the control process without interrupting it. In this case , once the training is finished the updated layers/network parameters are updated in the layers/network of the subunits 121,122,123 that are involved into control.

### Fig7

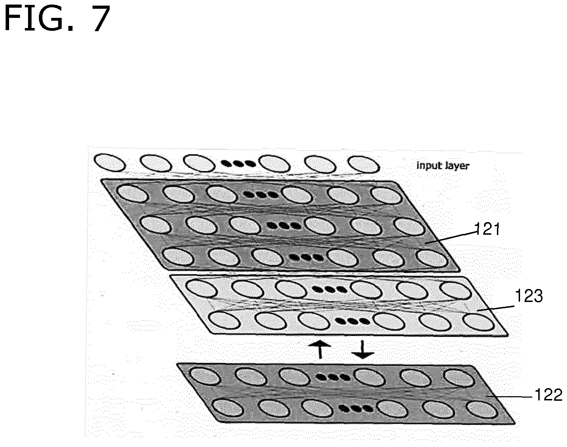

FIG.7 shows another possible architecture of the control unit 12. In this architecture, the layers of the observation sub-unit 121 and correction sub-units 123 are followed one after another (the outputs of the observation sub-unit 121 are the inputs of the correction sub-unit 123). The optimization sub-unit 122 is built here in parallel with the correction sub-unit 123 and the updates of the inner parameters may be in compliance with the description to Fig.4. The retraining here is done by copying the current neuron weight into the parallel duplicate of the correction sub-unit 123 that is an optimization layer. There, the retraining takes place and after that, the updates are loaded back. During the retraining, the correction sub-unit 123 proceed to correct the machining production conditions 124 adapting those to the momentary production conditions.

### Time series and processing

A time series of previously measured data is used in the method and setup here. From the at least one material-energy interaction measurement unit 7, measurements are taken, send to the observation sub-unit 121 and are stored in the at least one memory 120.

An important feature is the usage of some previous history of parameters changes. The processing of this information is done in neural network (artificial neural networks, NN), here in observation sub-unit 121, optimization sub-unit 122 and correction sub-unit 123. In this case, the history of the system parameters is stored in an array ***x(tᵢ)*,** where each element is the measured values of some parameters at discrete time stamps *tᵢ,* and the *i*=*1,..., M* defines the history duration (i.e. how many time stamps ago we need to store in the memory).

This information can be fed to the neural network in different schemes. First, if a simple neural network is used, the input layer of this network may contain the same number of the neurons as the number of the elements in ***x(tᵢ).*** In this case the input of each neuron of the input layer is connected to each element in ***x(tᵢ).*** As soon as we filled the array with the values we drop it into NN, using the input layers. The NN immediately propagates this information inside and forms the pattern with the modulations of the control signal ***u(tⱼ),*** where *j*=*i*+*1,...,N,* and N is the prediction interval.

Second scheme is for the recurrent neural networks. In this case the number of input neurons may be less than the number of elements in ***x(tᵢ).*** The input of ***x(ti)*** to NN is carried out by sequential feeding of its elements into the input neurons (at the same time the elements of the array can't be re-ordered and are kept as a sequence in time domain). In this case the activations of the neurons are carried out according to the data processing in recurrent NN.

Very briefly - the reaction of each neuron on the input portion of the information at time stamp *tᵢ* depends on its state that was provoked by the portion of information from the previous time stamp (*t*_{*i*-*1*})*.* This is in fact the realisation of the sensitivity to the starting conditions.

The third option can be the combination of recurrent and normal NN architectures. In this case the part of the information can be processed in one or another way (with the choice that depends on the situation). Alternately, the data can be split and the parts can be processed in different ways, or the entire input array can be processed in parallel in both architectures simultaneously and the output result is the superposition of both processing outputs.

Times series of measurements of the at least one material-energy interaction measurement unit 7 are collected in actual machining results s and stored in the memory 120. If additional material-energy interaction measurement units 8, 9, 10 are used, than also the connected measurement values are collected, leading to multiplicity of time series of results s, which are saved in the memory 120.

The possible sensors 7-10 involved monitor the actual machining results s in presence of the correction output signals u. The actual machining results s include the information about the actual machining results that may be different from the expected ones due to the changes in the production conditions. The actual machining results s in this invention is a time-series that is delivered in a form of a matrix with the size (nxm), where m is the time stamps that are taken into account (e.g. the history duration), and n is the number of sensors. In any case n has to be ≥ 1, wherein m has to be > 1.

We found that a minimum time series or history of measurements comprising a multiplicity of m measurements (m≥20) from at least one sensor n≥1 in a time of at least 100 microseconds is necessary for optimum estimation, on which trajectory the actual process is running.

As known (artificial) neural networks (neural networks, NN or ANN) are computing systems inspired by the biological neural networks that constitute animal brains.

The neural network itself is a framework for many different machine learning algorithms to work together and process complex data inputs. The output of each artificial neuron is typically computed by some non-linear function of the sum of its inputs. Such neural networks are forming here at least the observation sub-unit 121, optimization sub-unit 122 and correction sub-unit 123.

### Architecture of neural networks

The observation sub-unit 121, the optimization sub-unit 122 and the correction sub-unit 123 can be realized as artificial neurons, building different layers. These layers are performing different kinds of transformations on their inputs. Means are present ensuring forwarding data between all layers, possibly after traversing the layers multiple times. As known from neural networks, the observation sub-unit 121, the optimization sub-unit 122 and the correction sub-unit 123 are hidden neurons or hidden layers, while the input and output are not hidden.

Different architectures of the control neural networks are possible. The main idea is in the massive datasets that are needed to update NN, as well as long retraining time. In standard approach, this is not possible, while during retraining the control cannot be done efficiently (while the full resources will be occupied by the retraining procedure). To bypass this we split the entire network into sub-blocks (i.e. sublayer groups). Each such sub-block plays a role of short and long memory. The short memory includes less layers (or neurons) and can be updated faster, thus avoiding the disconnection of entire neural network from control task during update procedure. The information from the short memory blocks than is transferred further to the long memory that contains more layers (more neurons) and requires more time for updates. During this time, the short memory provides the decision-making and the entire system still running the control task without disconnections.

This architecture can be organised as a sequence of operations in time domain, or, alternately as a parallel NN blocks that realise short and long memory functionality. Here we have to mention the Hopfield NN that have already built in memory updates and can be used as the aforementioned blocks.

The NN that can be employed for both aforementioned tasks are: simple feed forward, convolutional (both - spectral and simple ones, with regular convolution operations, recurrent, Hopfield etc.)

### Control unit

The control unit 12 is a machine learning based that is predicting and/or determining and/or calculating the output of the correction signal to the energy delivery system, changing its parameters and thus effecting the amount of the transmitted energy from the energy source generator to the material includes several sub-units and a memory that stores some history of the machine parameters corresponding to the measured and/or quantified machining/processing results;
At least the observation sub-unit 121 is part of the control unit 12 and collects all the measurements from the detector(s) of the measurements unit that track the energy-deposition and/or material machining/processing and/or material response to energy delivered and/or material structure. In case of laser systems, this is at least one detectors (such as mechanical, optical, acoustic imaging, thermal, etc. detectors) and/or the measurements of the reflected light emitted from the optical head and reflected on a surface or near the surface of the work-piece to return to the laser apparatus via an optical system in the machining head. In case of the laser processing, this unit observes the state of the laser processing system (e.g. the result of the laser processing) in association with the characteristics of the output of the laser delivery system;
At least the correction sub-unit 123 is part of the control unit 12 and generates the correction (signal) and sends it to the energy delivery unit and /or energy source generator unit, thus correcting the parameters of the output energies from both and expecting a known response, or measuring the response of those units by means of output energy measurement detectors that are mentioned above, and in case the deviations exist compensate those applying the same correction in additional control loop but using the same technique as for the materials machining control;
All sub-units 121, 123 are based on neural networks as machine learning technique.

Optionally the optimization sub-unit 122 can form part of the control unit 12, receiving the results from the observation unit, compares it with the old parameters of the observation sub-unit, provides the updates of the existing parameters of the correction sub-unit 123 and/or creates new parameters inside the correction sub-unit; Also the optimization sub-unit 122 is based on neural networks as machine learning technique.

The observation sub-unit 121, optimization sub-unit 122 and correction sub-unit 123 are included in the control unit 12 and may be unified together within the same architecture/algorithm/framework/soft-hardware or separated one from each other but providing a fixed functionality.

The inputs are obtained from the machining-result measuring, and also maybe from the outputs of the energy generator 1 and energy delivery unit 3, and the outputs are the correction commands to the energy generator 1 and/or into the energy delivery unit 3 in this case.

All inputs and outputs are memorized and stored in the memory 120 and/or an internal memory of the observation sub-unit 121 as a time series of the fixed or adaptively changed length, synchronize with each other, or delayed relatively each other, in which the changes in mutual delay and lengths dependent on the errors in the correction, and contain the preceding history of all inputs-outputs of the control unit 12, and based on that the control unit designs and/or choose and outputs a correction command to the energy generator and/or energy delivery source.

The observation sub-unit 121 keeps all the observations as a set of the inner parameters, or structure of some elements, and updates those depending on the changes in the observations and receives the information from the machining result measurement unit as time series of one or several dimensions, in which the history of all the input parameters are stored during some passed time interval.

The optimization sub-unit 122 is observing the incoming time series from the observation sub-unit 121 and/or from the machining results and/or from both units simultaneously or directly and estimates if the updates of the inner parameters of the correction sub-unit 123 is needed and/or those updates are carried out regularly.

The self-learning of the control unit 12 is based on receiving the information about the material processing / material machining in real time and accumulating it as a short history of actual machining parameters together with the corresponding machining conditions, builds the model for the machining dynamics with the prediction / regression of the future dynamics of the machining results, and designs the correction strategy of the machining conditions to achieve the desired machining and/or material quality (e.g. predefined material properties and/or mechanical properties and/or microstructure and/or structure and/or shape, etc...). The updates of the model are made regularly although keeping previous memories about the machining and sorting the new knowledge according to some defined criteria.

The implementation of layers/sub-units forming neural networks is done according to known means of hardware and software forming part of the control unit 12. Because a person skilled knows possible setups of such neural networks, it is not necessary to describe the practical embodiments in more detail.

### LIST OF REFERENCE NUMERALS

- 0: material processing setup / laser processing method
- 1: energy generator unit/energy source
- 2: generated energy respectively ion/paricle beam
- 3: energy delivery unit
- 4: energy delivery output measurement
- 5: material energy interaction zone
- 6: material to be processed
- 7: material-energy interaction measurement unit/ sensor
- 8,9,10: additional material-energy interaction measurement units/sensors
- 11: energy delivery control sub-unit
- 12: control unit (Fig.2 in detail, using neural networks Fig. 6)
120 memory
121 observation sub-unit (Fig.3 in detail)
122 optimization sub-unit (Fig. 4 in detail)
123 correction sub-unit (Fig. 5 in detail)
124 production conditions
125 comparator
- 13: control unit input
- 14: control unit output
- 15: second energy delivery control sub-unit
- 16: energy generator output measurement
- s: actual machining results
- s': desired machining results
- u: correction output signal

## Claims

1. Method for automated control of material or laser processing processes, wherein the method is controlled by a control unit (12) calculating correction output signals (u) and controlling an energy generator unit (1), an energy delivery unit (3), an energy delivery output measurement (4), at least one material-energy interaction measurement unit (7) for measurement of actual machining results (s), which are fed via a control unit input (13) and sub-units for generating correction output signals (u) in a close loop, which lead to desired machining results (s'), wherein the correction output signals (u) are applied via a control unit output (14) to the energy generator unit (1) and the energy delivery unit (3) by an energy delivery control sub-unit (11) and/or a second energy delivery control sub-unit (15), and the computation of correction output signals (u) is executed by machine learning procedures,
**characterized in the steps:**
- measurement of time series of actual machining results (s) by the at least one material-energy interaction measurement unit (7) in time intervals, leading to time series of (s[.]) measurements, wherein the time-series is delivered in a form of a matrix with the size (nxm), where m is the time stamps and n is the number of sensors, where n ≥ 1 and m > 1,
- storing time series of (s[.]) measurements, desired machining results (s') and correction output signals (u) within a time series in the past in a memory (120) of the control unit (12),
- sending of the time series of actual machining results (s[.]) to an observation sub-unit (121),
- analysis by comparison of time-series u and time-series s in observation sub-unit (121) based on machine learning technique,
- sending of time-series u and/or time-series s and/or results of observation sub-unit (121) to a correction sub-unit (123) based on neural networks as machine learning technique, before
- correction output signals (u) in form of production conditions (124) are send from correction sub-unit (123) via control unit output (14) of the control unit (12) out to energy delivery control sub-unit (11) and/or a second energy delivery control sub-unit (15), initiating the next processing step of the adaptive self-learning material processing and
- repetition for the next time-series s.

2. Method according to claim 1, wherein time-series u and/or time-series s and/or results of observation sub-unit (121) are sent to an optimization sub-unit (122) based on neural networks as machine learning technique, before time-series u and/or time-series s and/or results of observation sub-unit (121) and/or results of optimization sub-unit (122) are send to the correction sub-unit (123), wherein the optimization sub-unit (122) includes the inner parameters of the correction sub-unit (123) and updates those for a better performance during changing production conditions, optimizing the results of the correction sub-unit (123).

3. Method according to one of the preceding claims, wherein the correction sub-unit (123) and/or the optimization sub-unit (122) and/or observation sub-unit (121) are realized as cascaded groups of layers within a single network and each group has different depth.

4. Method according to one of the claims 1 or 2, wherein the correction sub-unit (123) and/or the optimization sub-unit (122) and/or observation sub-unit (121) are realized as cascaded groups of layers within multiple separate networks.

5. Method according to one of the preceding claims, wherein the training is carried out first on more shallow sublayers/subnetworks forming subunits (121, 122, 123) with lower numbers of neurons inside each sublayers/subnetworks, before the results are transmitted further to deeper sublayers/subnetworks with greater number of neurons than the shallow sublayers/subnetworks, while at least one group of shallow or deeper sublayers/subnetworks is at the same time in training process and the actual process control is taken over by at least one group of sublayers/subnetworks which is not in training at the same time.

6. Method according to claim 5, wherein the correction sub-unit (123) is included into the closed feedback loop and runs independently from the observation sub-unit (121) and optimization sub-unit (122) of the control unit (12).

7. Method according to one of the preceding claims 3 or 4, wherein parallel to the cascaded groups of layers of neural networks of the correction sub-unit (123) and/or the optimization sub-unit (122) and/or observation sub-unit (121), mirror neural networks comprising cascaded groups of layers of neural networks and working in the background and mirroring the operating sub-units (121, 122, 123) are used, executing the retraining in the background and therewith avoiding to stop the actual process, so that after finishing the retraining, the parameters from the mirror neural networks are transferred to the operating subunits (121, 122, 123)

8. Method according to one of the preceding claims, wherein the neural networks of the sub-units (121, 122, 123) are formed as
- feed forward neural networks with regular or irregular connection grids and/or
- spiking neural networks and/or
- Hopfield networks and/or
- Bayesian networks.

9. Method according to one of the preceding claims, wherein a minimum time series comprising a multiplicity of m≥20 measurements from at least one sensor (7) n≥1 in a measuring time of at least 100 microseconds is used for estimation of trajectory the actual process is running.

10. Method according to one of the preceding claims, wherein a retraining inside the optimization sub-unit (122) by neural networks is done by parameter updates from optimization sub-unit (122) which are loaded in the correction sub-unit (123) in a regular manner within defined time intervals and/or in case the correction sub-unit (123) cannot find a right correction strategy during some fixed time period.

11. Method according to one of the preceding claims, wherein the estimated values of the neural networks of the observation sub-unit (121) are either kept in memory (120) of the control unit (12) or an internal memory of the observation sub-unit (121).

12. Method according to claim 10, wherein if new production conditions (124) are not known from internal memory of the observation sub-unit (121) or memory (120), inner parameters of observation sub-unit (121) are updated by the correction sub-unit (123) for estimating new correction output signals (u).

13. Control unit (12) for automated control of material or laser processing processes, controlling an energy generator unit (1), an energy delivery unit (3), an energy delivery output measurement (4), at least one material-energy interaction measurement unit (7) for measurement of actual machining results (s), which are fed via a control unit input (13), comprising means for sending correction output signals (u) from a control unit output (14) to an energy delivery control sub-unit (11) and/or a second energy delivery control sub-unit (15),
**characterized in that**
the control unit (12) is comprising a memory (120) for storing time series of actual machining results (s[.]), desired machining results (s') and correction output signals (u),
means for sending data to
an observation sub-unit (121) based on neural networks as machine learning technique and
a correction sub-unit (123) based on neural networks as machine learning technique, wherein the correction sub-unit (123) is generating the correction output signals (u) with neural networks.

14. Control unit (12) according to claim 13, wherein between the observation sub-unit (121) and the correction sub-unit (123), data is fed into an optimization sub-unit (122) based on neural networks, too, wherein the optimization sub-unit (122) updates the inner parameters of the correction sub-unit (123) for a better performance during changing production conditions (124), optimizing the results of the correction sub-unit (123).

15. Control unit (12) according to one of the claims 13 to 14,
wherein additional material-energy interaction measurement units (8, 9, 10) are connected to the control unit (12) with n ≥ 2 delivering a multidimensional time-series matrix with the size (nxm), where m is the time stamps and n is the number of sensors.
